(19) Europäisches Patentamt
European Patent Office
Office européen des brevets

(11) **EP 1 096 488 A2**

(12) **EUROPEAN PATENT APPLICATION**

(43) Date of publication:
02.05.2001 Bulletin 2001/18

(51) Int. Cl.⁷: **G11B 20/10**

(21) Application number: 00123309.7

(22) Date of filing: 26.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **26.10.1999 US 427287**

(71) Applicant:
**MATSUSHITA ELECTRIC INDUSTRIAL CO., LTD.**
**Kadoma-shi, Osaka 571-8501 (JP)**

(72) Inventors:
• **Horibe, Ryusuke**
  **Hirakata-shi, Osaka 573-0071 (JP)**
• **Kawakami, Shinichi**
  **Kishiwada-shi, Osaka 596-0045 (JP)**
• **Aoki, Kazuhiro**
  **Suita-shi, Osaka 565-0824 (JP)**
• **Kanekami, Youichi**
  **Mishima-gun, Osaka 618-0001 (JP)**

(74) Representative:
**Schwabe - Sandmair - Marx**
**Stuntzstrasse 16**
**81677 München (DE)**

(54) **Reproduction signal processing apparatus**

(57)    A reproduction signal processing apparatus includes a wave-shaping apparatus (100) including a detection circuit (3,4) for detecting a reproduction signal stored in an optical disk (1) and reproduced by an optical pickup circuit (2), using a prescribed detection time constant to detect at least one of an upper envelope (RSU) and a lower envelope (RSD) of the reproduction signal (RS); an averaging circuit (5) for putting a weight represented by a weighting coefficient to at least one of the upper envelope (RSU) and the lower envelope (RSD) detected by the detection circuit (3,4) to calculate an average value (AVE) obtained using the at least one of the upper envelope (RSU) and the lower envelope (RSD); and a subtraction circuit (7) for subtracting a signal corresponding to the average value (AVE) calculated by the averaging circuit (5) from the reproduction signal to output a wave-shaped signal (SS). The reproduction signal processing apparatus further includes an A/D converter (1300) for performing A/D conversion of the wave-shaped signal output by the subtraction circuit.

FIG.1

EP 1 096 488 A2

## Description

BACKGROUND OF THE INVENTION

1. FIELD OF THE INVENTION:

The present invention relates to a wave-shaping apparatus and a reproduction signal processing apparatus including the same, and specifically a wave-shaping apparatus for optimally performing digitization or A/D (analog to digital) conversion of a reproduction signal obtained by an optical pickup circuit, and a reproduction signal processing apparatus including the same.

2. DESCRIPTION OF THE RELATED ART:

Recently, optical disks are being used in various conditions and stored in various manners. Under the circumstances, surfaces of optical disks are often scratched or exposed to dust. In order to read information from an optical disk having dust or scratches, a high precision signal determination is required.

Especially, an optical disk having information at a high density such as a DVD (digital versatile disk) has an inferior SNR (signal/noise ratio) at the shortest pit portion. Accordingly, it is required to minimize errors when a signal is digitized.

Information recording to a CD (compact disk) is performed by EFM (eight to fourteen modulation), and information recording to a DVD is performed by 8-16 modulation. These modulation systems make the spectrum of recording pattern to the disk substantially DC component-free. In order to make use of such characteristics of these modulation systems, a reproduction signal is usually digitized by a digitizing circuit for controlling the slicing level of the signal by performing negative feedback control, so that the duty ratio of the digitized signals is 50:50.

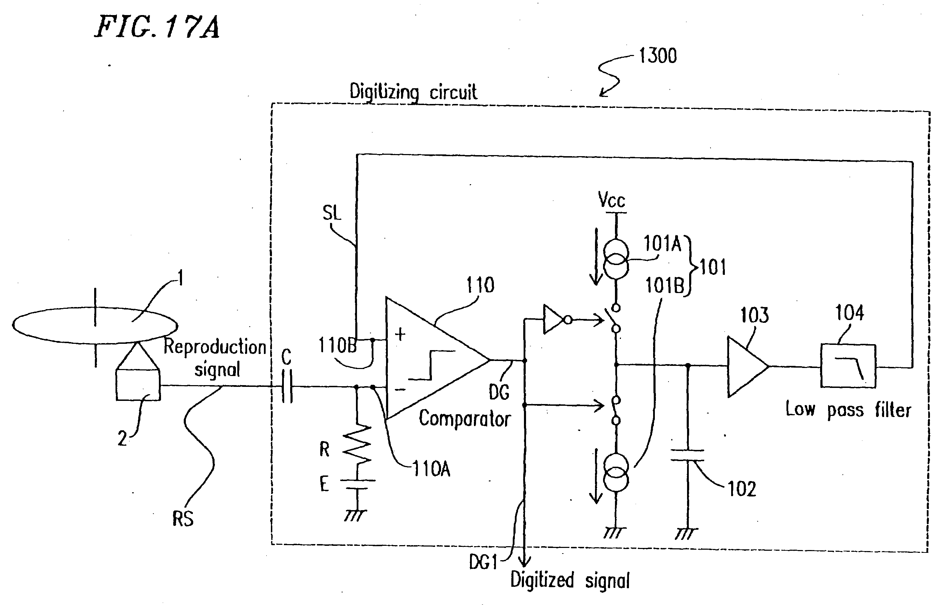

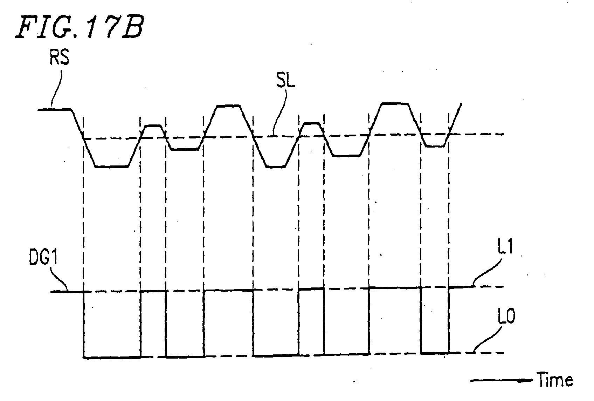

With reference to Figure **17A**, a digitizing circuit **1300** will be described.

An optical pickup circuit **2** outputs a reproduction signal RS obtained from an optical disk **1**. The reproduction signal RS is capacitance-coupled by a capacitor C and supplied with a prescribed bias voltage of, for example, VCC/2. The resultant signal is input to a negative (-) input terminal **110A** of a comparator **110** and compared with a slicing level which is input to a positive (+) input terminal **110B** of the comparator **110**. Thus, a digitized signal DG1 is output from the comparator **110**.

A charge pump **101** is driven, i.e., the potential of a charge capacitor **102** is increased or decreased, in accordance with the polarity of the digitized signal DG1 output from the comparator **110**. A charge voltage stored in the charge capacitor **102** is current-amplified by a buffer **103** and ripple-removed by a low pass filter **104**. Then, the resultant signal is input to the positive input terminal **110B** of the comparator **110**.

For example, when the potential of the negative input terminal **110A** is higher than the potential of the positive input terminal **110B**, the output level from the comparator **110** is 0. Then, a charge pump **101A** is turned on to raise the potential of the charge capacitor **102**. Thus, the potential of the positive input terminal **110B** of the comparator **110** is raised. In this manner, negative feedback control is performed so that the difference between the potential of the positive input terminal **110B** and the potential of the negative input terminal **110A** becomes 0.

When the potential of the negative input terminal **110A** is lower than the potential of the positive input terminal **110B**, a charge pump **101B** is turned on to reduce the potential of the charge capacitor **102**. Thus, the potential of the positive input terminal **110B** of the comparator **110** is lowered. In this manner, negative feedback control is performed so that the difference between the potential of the positive input terminal **110B** and the potential of the negative input terminal **110A** becomes 0.

Figure **17B** is a waveform diagram of a high frequency reproduction signal RS. When such a high frequency reproduction signal RS is input to the digitizing circuit **1300**, a negative feedback digitizing slicing level SL is controlled so that the duty ratio of the "0" level L0 and the "1" level of the digitized signal DG1 output from the digitizing circuit **1300** becomes 50:50.

A response ability of the negative feedback control is determined by the driving current value of the charge pump **101**, the capacitance of the charge capacitor **102**, and the time constant of the low pass filter **104**.

The above-described digitized signal processing can be entirely implemented by digital signal processing.

Recently, more and more digital circuits have been used. An analog reproduction signal from an optical disk is processed by an A/D converter with multiple bits, and then processed by a digital signal processing circuit for reproducing the signal entirely by digital processing. A circuit including the A/D converter and the digital signal processing circuit is generally referred to as a "digital read channel". Use of a digital read channel realizes stable operations by suppressing dispersion among circuits and reduces an error rate by digital signal processing such as, for example, PRML (partial response/most likelihood).

When an optical disk has defects such as dust or scratches, laser light from an optical pickup circuit is blocked by the dust or scratches. Accordingly, the level of the reproduction signal is significantly fluctuated in terms of both direct current or alternate current. In order to accurately digitize the reproduction signal despite such changes, the digitizing circuit **1300** needs to have a higher response ability so as to follow the changes.

However, the spectrum of recording pattern to the optical disk is not completely DC component-free around a defect change frequency (several kilohertz or less). Thus, the cut-off frequency of the low pass filter **104** needs to be raised to improve the response ability of the digitizing circuit **1300**. In such a case, a DC fluctuation component of the reproduction signal is mixed into a negative feedback signal, i.e., the signal input to the positive input terminal **110B** as an external disturbance. This prevents accurate digitization, and a data slicing error occurs and generation of jitter is increased.

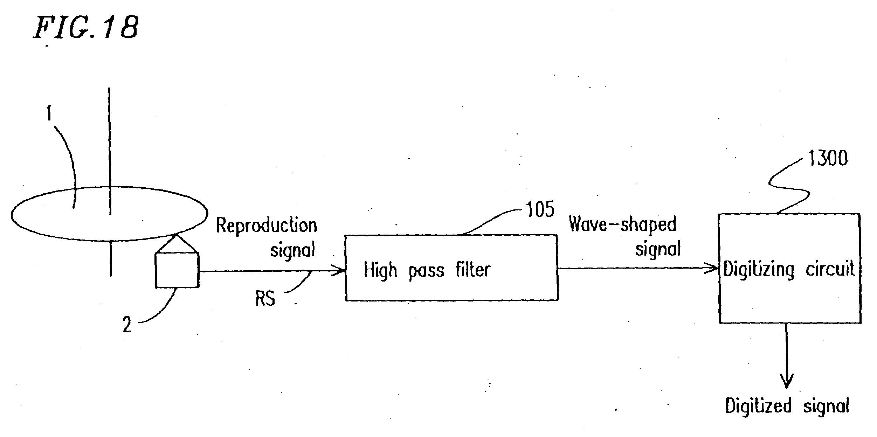

Figure **18** shows a circuit designed for alleviating the data slicing error. The reproduction signal RS is passed through a high pass filter **105**, before being input to the digitizing circuit **1300**, to remove a low frequency band fluctuation component, so that the reproduction signal RS has a line of symmetry between the upper half and the lower half even when the signal level is fluctuated by defects. In this manner, the control load performed by the digitizing circuit **1300** is alleviated and thus the data slicing error is alleviated.

However, such a circuit removes the low frequency band fluctuation component in a steady state, i.e., even when there is no defect. Therefore, a data slicing error occurs by the lack of information provided by the low frequency band fluctuation component and the generation of jitter is increased.

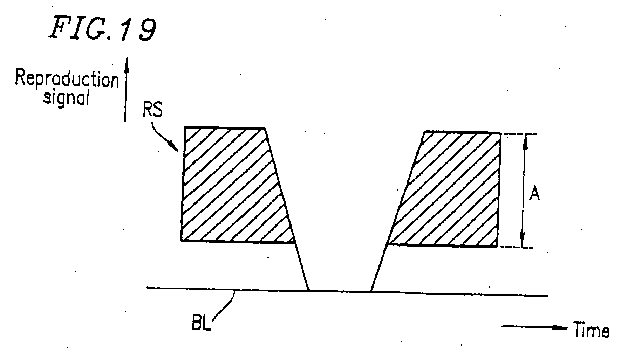

Figure **19** shows a signal level when a light beam passes through a defect such as, for example, a dropout. Since light reflected by the optical disk is not obtained in this case, the level of the reproduction signal RS is lowered to a black level BL. This phenomenon is conspicuous in the case of dual layer DVDs which has a higher ratio of stray light with respect to the incident light beam than the other types of optical disks. When performing A/D conversion of the reproduction signal RS, a maximum use of the dynamic range of A/D conversion is usually needed with respect to an amplitude A of a signal of normal reproduction from the viewpoint of SNR. However, when the signal level is reduced to the black level BL by the dropout, the amplitude of the reproduction signal RS exceeds the dynamic range. This adversely influences the digital signal processing.

SUMMARY OF THE INVENTION

A reproduction signal processing apparatus according to the present invention includes a wave-shaping apparatus including a detection circuit for detecting a reproduction signal stored in an optical disk and reproduced by an optical pickup circuit, using a prescribed detection time constant to detect at least one of an upper envelope and a lower envelope of the reproduction signal; an averaging circuit for putting a weight represented by a weighting coefficient to at least one of the upper envelope and the lower envelope detected by the detection circuit to calculate an average value obtained using the at least one of the upper envelope and the lower envelope; and a subtraction circuit for subtracting a signal corresponding to the average value calculated by the averaging circuit from the reproduction signal to output a wave-shaped signal. The reproduction signal processing apparatus according to the present invention further includes an A/D converter for performing A/D conversion of the wave-shaped signal output by the subtraction circuit.

In one embodiment of the invention, the reproduction signal processing apparatus further includes a digital signal processing circuit for performing digital signal processing of an output from the A/D converter to output reproduction data and a reproduction clock.

In one embodiment of the invention, the detection circuit detects the upper envelope, and the averaging circuit puts a weight represented by a weighting coefficient to the upper envelope to calculate the average value.

In one embodiment of the invention, the detection circuit includes a first detection circuit for detecting the reproduction signal using a first detection time constant to detect the upper envelope of the reproduction signal, and a second detection circuit for detecting the reproduction signal using a second detection time constant to detect the lower envelope of the reproduction signal. The averaging circuit puts a weight represented by a weighting coefficient to each of the upper envelope and the lower envelope to calculate the average value.

In one embodiment of the invention, the reproduction signal processing apparatus further includes a low pass filter for smoothing the average value to output a smoothed signal, wherein the subtraction circuit subtracts the smoothed signal output by the low pass filter from the reproduction signal.

In one embodiment of the invention, the weighting coefficient is determined based on an asymmetry quantity of the reproduction signal.

In one embodiment of the invention, the prescribed detection time constant is determined to be substantially in proportion to a diameter of a light spot on the optical disk.

In one embodiment of the invention, the prescribed detection time constant is determined to be substantially in inverse proportion to a reproduction linear velocity of the optical disk.

In one embodiment of the invention, a cutoff frequency of the low pass filter is determined to be substantially in inverse proportion to a diameter of a light spot on the optical disk.

In one embodiment of the invention, a cutoff frequency of the low pass filter is determined to be substantially in proportion to a reproduction linear velocity of the optical disk.

In one embodiment of the invention, the wave-shaping apparatus further includes a dropout detection circuit for detecting a dropout indicating a decrease in an amplitude of the reproduction signal.

When the dropout is detected by the dropout detection circuit, the prescribed detection time constant is set to be shorter than a time constant set when no dropout is detected.

In one embodiment of the invention, the wave-shaping apparatus includes a dropout detection circuit for detecting a dropout indicating a decrease in an amplitude of the reproduction signal. When the dropout is detected by the dropout detection circuit, a cutoff frequency of the low pass filter is set to be higher than a cutoff frequency set when no dropout is detected.

According to one aspect of the invention, a signal output by a wave-shaping apparatus is input to an A/D converter. Due to such a structure, even when the amplitude of the reproduction signal obtained from an optical disk significantly fluctuates by an unrecoverable defect on the optical disk such as a scratch, a change in the amplitude of the reproduction signal can be restricted within the range of the amplitude of the wave-shaped signal output by the wave-shaping apparatus. Therefore, the amplitude of the output from the wave-shaping apparatus can be equal to or almost equal to and within the dynamic range of the A/D converter. Accordingly, a maximum use of the dynamic range of the A/D converter is possible. As a result, the stability of the digital signal processing circuit can be improved.

According to another aspect of the invention, the wave-shaping performance when the optical disk has a defect is improved while and the generation of jitters when the optical disk has no defect is not deteriorated.

Thus, the invention described herein makes possible the advantage of providing (1) a wave-shaping apparatus for alleviating the load of a digitizing circuit and significantly decreasing the generation of jitter, and a reproduction signal processing apparatus including such a wave-shaping apparatus; (2) a wave-shaping apparatus for accurately digitizing a reproduction signal even when the level of the reproduction signal obtained from an optical disk significantly fluctuates by a defect on the optical disk as well as when the optical disk has no defect, and a reproduction signal processing apparatus including such a wave-shaping apparatus; (3) a wave-shaping apparatus for making a maximum use of the dynamic range of an A/D converter, and a reproduction signal processing apparatus including such a wave-shaping apparatus; and (4) a wave-shaping apparatus for improving the stability of the digital signal processing circuit, and a reproduction signal processing apparatus including such a wave-shaping apparatus.

These and other advantages of the present invention will become apparent to those skilled in the art upon reading and understanding the following detailed description with reference to the accompanying figures.

BRIEF DESCRIPTION OF THE DRAWINGS

Figure **1** is a block diagram illustrating a structure of a reproduction signal processing apparatus in a first example according to the present invention;

Figure **2A** is a diagram illustrating an exemplary waveform of a reproduction signal obtained from an optical disk having a defect;

Figure **2B** is a diagram illustrating an average value obtained by performing weighting to the waveform shown in Figure **2A**;

Figure **2C** is a diagram illustrating a fluctuation component included in the reproduction signal shown in Figure **2A**;

Figure **2D** is a diagram illustrating a waveform obtained by wave-shaping the reproduction signal shown in Figure **2A**;

Figure **3** is a block diagram illustrating an exemplary structure of an averaging circuit shown in Figure **1**;

Figure **4A** is a diagram illustrating a frequency spectrum of a reproduction signal without being wave-shaped:

Figure **4B** is a diagram illustrating a frequency spectrum of a reproduction signal obtained by the reproduction signal processing apparatus shown in Figure **1**;

Figure **5** is a block diagram illustrating an exemplary structure of the average structure shown in Figure **1** when a weighting coefficient is 1:1;

Figure **6** is a block diagram illustrating a structure of a reproduction signal processing apparatus in a second example according to the present invention;

Figure **7A** is a diagram illustrating an exemplary waveform of a reproduction signal obtained when asymmetry occurs;

Figure **7B** is a diagram illustrating an average value obtained by performing weighting to the waveform shown in Figure **7A**;

Figure **7C** is a diagram illustrating a fluctuation component included in the reproduction signal shown in Figure **7A**;

Figure **7D** is a diagram illustrating a waveform obtained by wave-shaping the reproduction signal shown in Figure **7A**;

Figure **8** is a block diagram illustrating a structure of an asymmetry detection circuit shown in Figure **6**;

Figure **9A** is a diagram Illustrating a light spot having a relatively large diameter passing through a detect on an optical disk;

Figure **9B** is a diagram illustrating a decrease in the level of the reproduction signal when the light spot shown in Figure **9A** passes through the detect;

Figure **9C** is a diagram illustrating a light spot having a relatively small diameter passing through a detect on an optical disk;

Figure **9D** is a diagram illustrating a decrease in the level of the reproduction signal when the light spot shown in Figure **9C** passes through the detect;

Figure **10A** is a diagram illustrating a fluctuation of the reproduction signal when the reproduction linear velocity of the optical disk is normal;

Figure **10B** is a diagram illustrating a fluctuation of the reproduction signal when the reproduction linear velocity of the optical disk is higher than the normal linear velocity;

Figure **11** is a block diagram illustrating a structure of a reproduction signal processing apparatus in a third example according to the present invention;

Figure **12** is a block diagram illustrating a structure of another reproduction signal processing apparatus in a third example according to the present invention;

Figure **13A** is a block diagram illustrating a structure of still another reproduction signal processing apparatus in a third example according to the present invention;

Figure **13B** is a block diagram illustrating a structure of a digital signal processing circuit in the reproduction signal processing apparatus shown in Figure **13A**;

Figure **14** is a block diagram illustrating a structure of a reproduction signal processing apparatus in a fourth example according to the present invention;

Figure **15** is a block diagram illustrating a structure of another reproduction signal processing apparatus in the fourth example according to the present invention;

Figure **16** is a block diagram illustrating a structure of still another reproduction signal processing apparatus in the fourth example according to the present invention;

Figure **17A** is a block diagram illustrating a structure of a digitizing circuit;

Figure **17B** is a diagram illustrating a high frequency reproduction signal input to the digitizing circuit;

Figure **18** is a block diagram illustrating a structure of a conventional wave-shaping apparatus; and

Figure **19** is a diagram illustrating a reproduction signal obtained when a light beam passes through a defect of an optical disk.

DESCRIPTION OF THE PREFERRED EMBODIMENTS

Hereinafter, the present invention will be described by way of illustrative examples with reference to the accompanying drawings. In this specification, the term "upper envelope" is defined to represent an upper line of an envelope of a reproduction signal which is closer to a mirror level, and the term "lower envelope" is defined to represent a lower line of an envelope of a reproduction signal which is closer to a black level.

(Example 1)

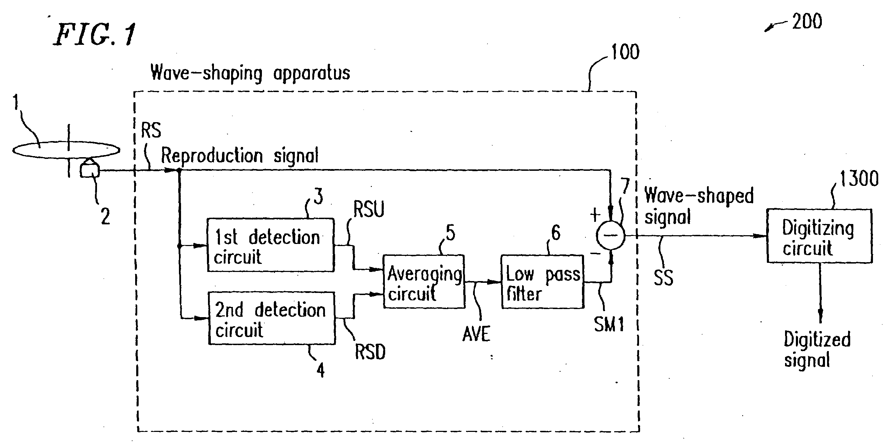

A reproduction signal processing apparatus **200** in a first example according to the present invention will be described with reference to Figure **1**. Figure **1** is a block diagram of the reproduction signal processing apparatus **200**. As shown in Figure **1**, the reproduction signal processing apparatus **200** includes a wave-shaping apparatus **100** and a digitizing circuit **1300**.

A signal recorded on an optical disk **1** is reproduced by an optical pickup circuit **2** as a reproduction signal RS.

The wave-shaping apparatus **100** includes a first detection circuit **3** for detecting the reproduction signal RS from the optical pickup circuit **2** at a prescribed time constant and thus detecting an upper envelope RSU, a second detection circuit **4** for detecting the reproduction signal RS from the optical pickup circuit **2** at a prescribed time constant and thus detecting a lower envelope RSD, an averaging circuit **5** for finding an average value AVE of the upper envelope RSU and the lower envelope RSD, a low pass filter **6** for smoothing the AVE obtained by the averaging circuit **5** to output a smoothed signal SM1, and a subtraction circuit **7** for subtracting the smoothed signal SM1 from the reproduction signal RS to output a wave-shaped signal SS. The digitizing circuit **1300** digitizes the wave-shaped signal SS to output a digitized signal.

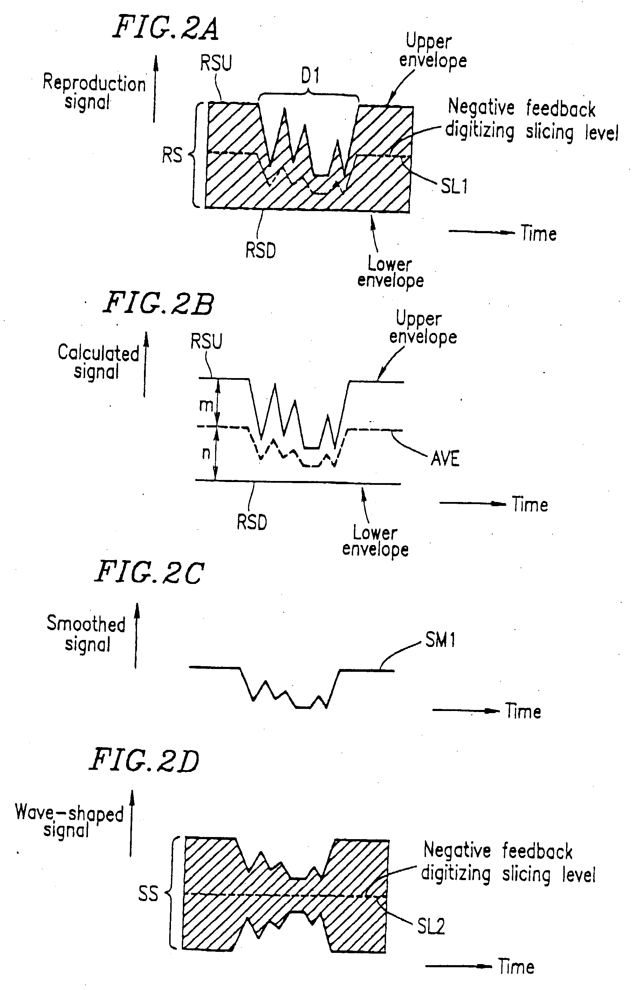

With reference to Figures **2A** through **2D**, an exemplary operation of the wave-shaping apparatus **100** will be described.

As described above, a signal stored in the optical disk **1** (Figure **1**) is read by the optical pickup circuit **2** as a reproduction signal RS. When the optical disk **1** has a defect such as, for example, a scratch, the reproduction signal RS includes a disturbance D1 as shown in Figure **2A**.

When the reproduction signal RS is directly input to the digitizing circuit **1300**, the reproduction signal RS is digitized with a negative feedback digitizing slicing level SL1, which follows an average value of the upper envelope RSU and the lower envelope RSD or the vicinity thereof. However, when the disturbance D1 caused by a defect has an excessively short cycle, the negative feedback digitizing slicing level SL1 cannot appropriately follow the disturbance D1, resulting in a slicing error.

In order to avoid such an inconvenience, the reproduction signal processing apparatus **200** includes the above-described elements and operates as follows.

Referring to Figure **2A**, the first detection circuit **3** (Figure **1**) detects the reproduction signal RS from the optical pickup circuit **2** and detects the upper envelope RSU. The second detection circuit **4** (Figure **1**) detects the reproduction signal RS from the optical pickup circuit **2** and detects the lower envelope RSD.

Referring to Figure **2B**, the averaging circuit **5** puts a weight represented by a weighting coefficient M:N to the upper envelope RSU and the lower envelope RSD to calculate the average value AVE.

Referring to Figure **2C**, the low pass filter **6** removes a noise component included in the average value AVE and extracts a hazardous DC fluctuation component included in the reproduction signal RS obtained when the optical disk (Figure **1**) has a defect. The signal containing substantially only the extracted component is output as a smoothed signal SM1.

Referring to Figure **2D**, the subtraction circuit **7** subtracts the smoothed signal SM1 from the reproduction signal RS to output a wave-shaped signal SS which has a lines of symmetry between the upper half and the lower half.

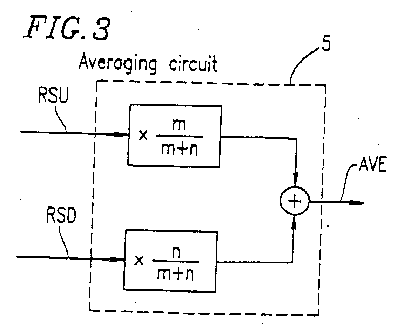

When the wave-shaped signal SS obtained as a result of such pre-processing is input to the digitizing circuit **1300**, the wave-shaped signal SS is digitized with a negative feedback digitizing slicing level SL2. The negative feedback digitizing slicing level SL2 does not substantially fluctuate even when the disturbance D1 caused by the defect has an excessively short cycle and can appropriately follow the disturbance D1. Thus, slicing errors are significantly reduced. Figure **3** shows an exemplary structure of the averaging circuit **5**. As shown in Figure **3**, the averaging circuit **5** can be realized by a simple structure.

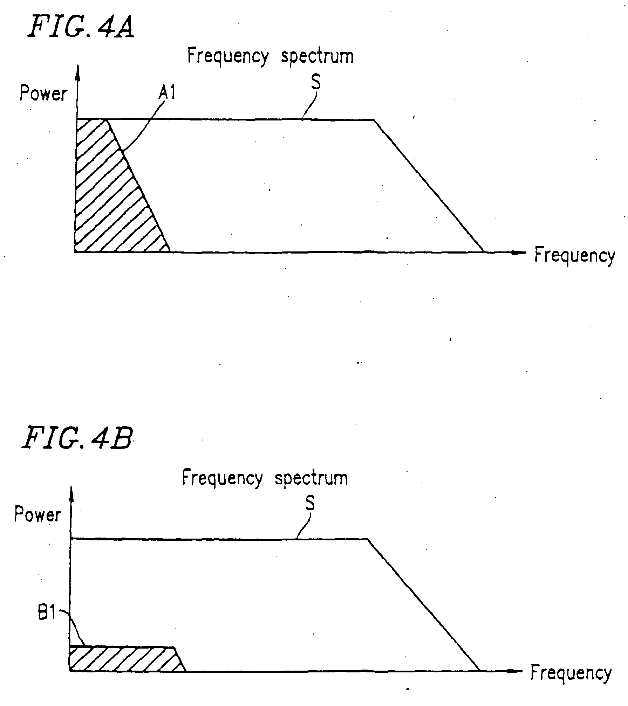

With reference to Figures **4A** and **4B**, a frequency spectrum of the reproduction signal RS will be described.

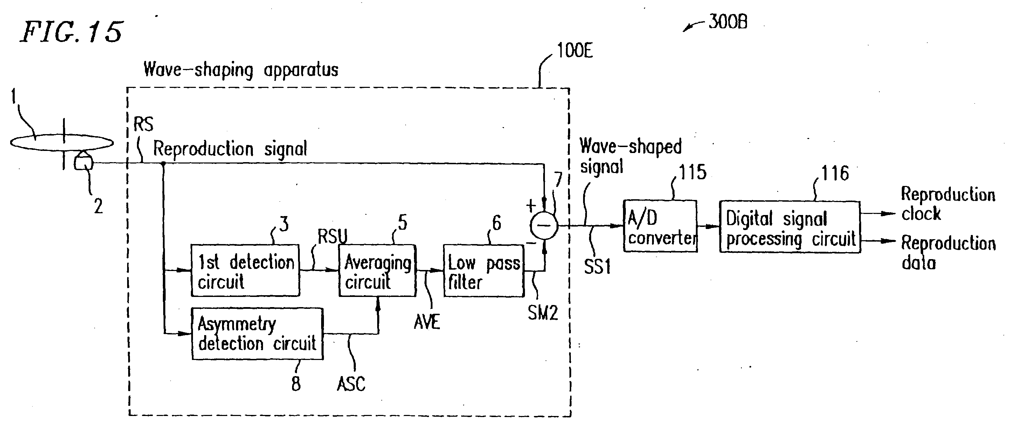

Figure **4A** shows the frequency spectrum obtained when the reproduction signal RS is processed using a high pass filter **105** described with reference to Figure 15. As shown in Figure **4A**, a component represented by area A1 is removed from the reproduction signal RS represented by area S by the high pass filter 105. Generation of jitter caused by the lack of the component represented by area A1 is increased.

Figure **4B** shows the frequency spectrum obtained when the reproduction signal RS is processed by the reproduction signal processing apparatus **200**. As shown in Figure **4B**, a component represented by an area as small as area B1 is removed from the reproduction signal RS. Thus, the generation of jitter can be minimized. As a result, the slicing performance obtained when the light beam passes through the defect of the optical disk **1** (Figure **1**) is improved while the generation of jitter when the optical disk **1** has no defect is not deteriorated.

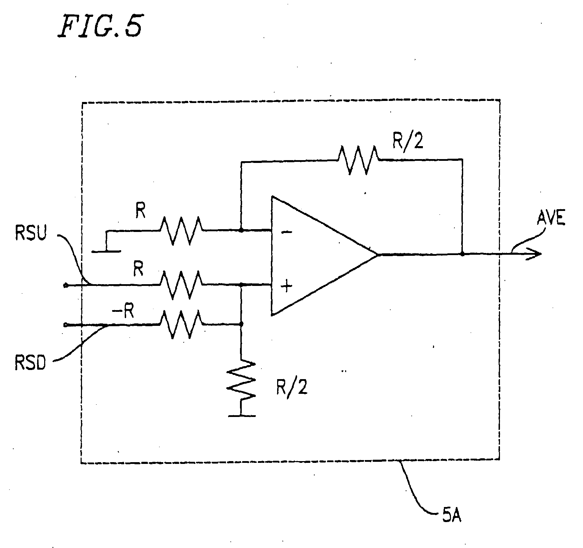

Where the weight coefficient M:N provided by the averaging circuit 5 to the upper and lower envelopes for finding the average value AVE is 1:1, an averaging circuit having a simple structure is obtained, Such an average circuit **5A** is shown in Figure **5**.

(Example 2)

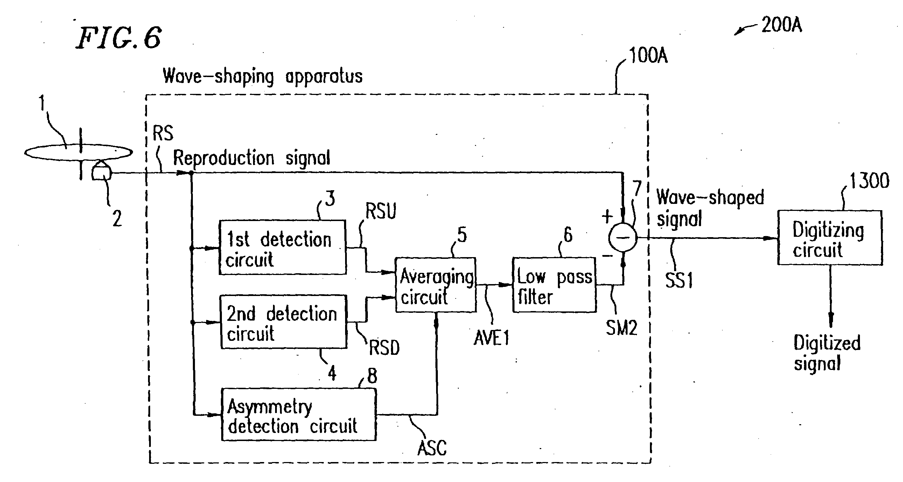

Figure **6** is a block diagram of a reproduction signal processing apparatus **200A** in a second example according to the present invention. Identical elements previously discussed with respect to Figure **1** bear identical reference numerals and the descriptions thereof will be omitted. The reproduction signal processing apparatus **200A** includes a wave-shaping apparatus **100A** and the digitizing circuit **1300**.

The wave-shaping apparatus **100A** includes an asymmetry detection circuit **8** in addition to the elements shown in Figure **1**. The weighting coefficient M:N to the upper and lower envelopes used by the averaging circuit **5** for calculating the average value AVE is determined to be substantially in proportion to an asymmetry quantity of the reproduction signal RS.

Asymmetry is usually generated under certain disc cutting conditions or recording conditions. When a recording pit tends to be written to be larger than a prescribed reference pit, the negative feedback digitizing slicing level to realize a post-digitization duty ratio of 50:50 is offset upward (or downward) from an intermediate level of the reproduction signal. When a recording pit tends to be written to be smaller than the prescribed reference pit, the negative feedback digitizing slicing level to realize a post-digitization duty ratio of 50:50 is offset downward (or upward) from the intermediate level. The offset amount of the negative feedback digitizing slicing level relative to the intermediate level of the reproduction signal RS is referred to as the "asymmetry quantity".

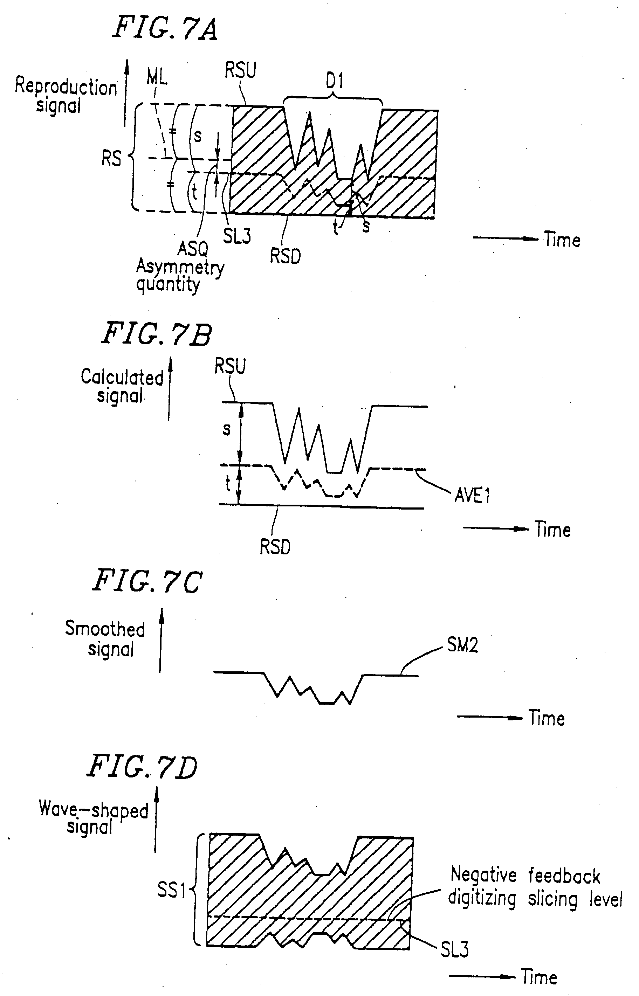

With reference to Figures **7A** through **7D**, a frequency spectrum of the reproduction signal RS will be described.

Figure **7A** shows the frequency spectrum obtained when the asymmetry occurs. As shown in Figure **7A**, a negative feedback digitizing slicing level SL3 is offset from an intermediate level ML by an asymmetry quantity ASQ. The ratio S:T, i.e., the ratio of (i) the distance between negative feedback digitizing slicing level SL3 and the upper envelope RSU and (ii) the distance between negative feedback digitizing slicing level SL3 and the lower envelope RSD is referred to as an "asymmetry coefficient ASC".

In a period corresponding to the disturbance D1 caused by a defect, the negative feedback digitizing slicing level SL3 fluctuates while maintaining the asymmetry coefficient ASC=S:T . However, in a period where the disturbance D1 has an excessively short cycle, the negative feedback digitizing slicing level SL3 cannot appropriately follow the disturbance D1, resulting in a slicing error.

In order to avoid such an inconvenience, the reproduction signal processing apparatus **200A** includes the above-described elements and operates as follows.

Referring to Figure **7B**, the averaging circuit **5** sets a weighting coefficient M:N to the upper envelope RSU and the lower envelope RSD used for calculating an average value AVE1 at the asymmetry coefficient ASC (S:T) which is output from the asymmetry detection circuit **8**, and puts a weight represented by the asymmetry coefficient ASC (S:T) to each of the upper envelope RSU and the lower envelope RSD to calculate the average value AVE1.

Referring to Figure **7C**, the low pass filter **6** removes a noise component included in the average value AVE1 and outputs a smoothed signal SM2. Referring to Figure **7D**, the subtraction circuit **7** subtracts the smoothed signal SM2 from the reproduction signal RS to output a wave-shaped signal SS1.

Where the weighting coefficient M:N is set at the asymmetry coefficient ASC (S:T), the fluctuation of the negative feedback digitizing slicing level SL3 is minimized as shown in Figure **7D**. Thus, the slicing performance when the light beam passes through the defect of the optical disk **1** (Figure **1**) is further improved.

The weighting coefficient M:N can also be 1:1 when the asymmetry occurs. With such setting, the fluctuation of the negative feedback digitizing slicing level SL3 is within a range causing no practical problem, although the fluctuation is slightly larger as compared with when the weighting coefficient M:N is set at the asymmetry coefficient.

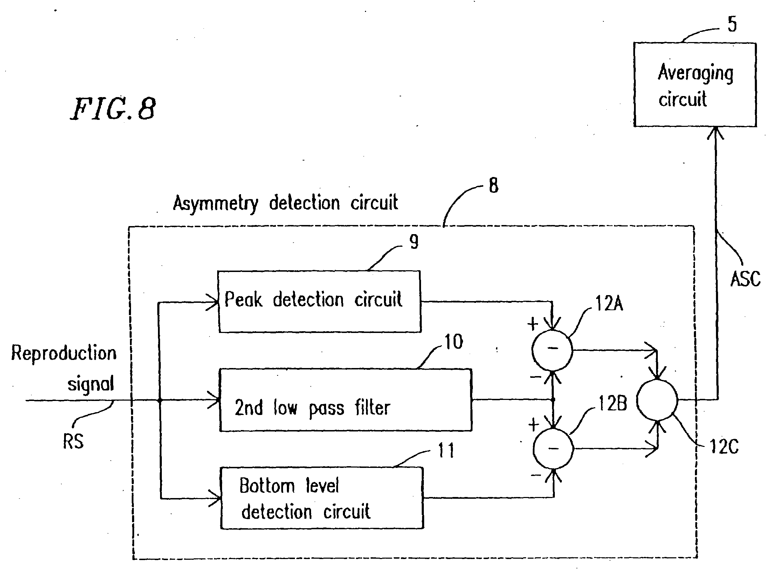

Figure **8** shows an exemplary structure of the asymmetry detection circuit **8**. The asymmetry detection circuit **8** includes a peak detection circuit **9** for detecting a peak of the reproduction signal RS, a second low pass filter **10** for detecting a DC level of the reproduction signal RS, a bottom level detection circuit **11** for detecting a bottom level of the reproduction signal RS, second subtraction circuits **12A** and **12B**, and an asymmetry coefficient calculation circuit **12C**. The asymmetry coefficient calculation circuit **12C** calculates the asymmetry coefficient ASC (S:T) based on the difference between the output from the peak detection circuit **9** and the output from the second low pass filter **10** and the difference between the output from the second low pass filter **10** and the output from the bottom level detection circuit **11**.

At least one of a first detection time constant used by the first detection circuit **3** and a second detection time constant used by the second detection circuit **4** is determined to be substantially in proportion to the diameter of a light spot on the optical disk **1** (Figure **1**).

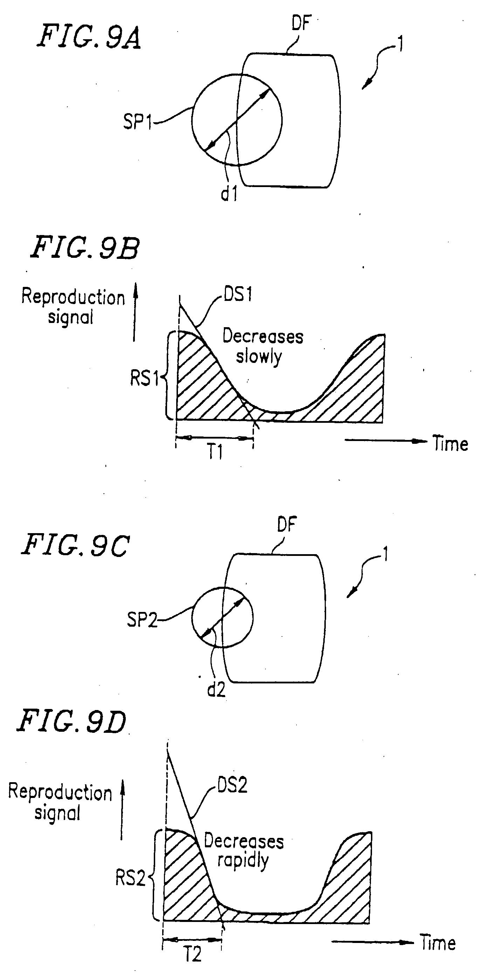

Figures **9A** and **9C** respectively show light spots SP1 and SP2 having diameters d1 and d2 passing through a defect DF on the optical disk **1**. In Figures **9A** and **9C**, the size of the defect DF is the same. Figure **9B** and **9D** respectively show the fluctuation of the reproduction signal RS in the states shown in Figures **9A** and **9C**.

The diameter d1 of the light spot SP1 is n times the diameter d2 of the light spot SP2 (n>l). When the diameter d1 is n times the diameter d2, the decreasing rate of the level of the reproduction signal RS (represented as RS1) in Figure **9B** is 1/n times the decreasing rate of the level of the reproduction signal RS (represented as RS2) in Figure **9D**. Thus, the level of the reproduction signal RS1 decreases more slowly than the reproduction signal RS2.

The first detection circuit **3** detects the reproduction signals RS1 and RS2 using detection signals DS1 and DS2, respectively. A detection time constant T1 of the detection signal DS1 is determined to be n times a detection time constant T2 of the detection signal DS2. As can be appreciated from this, tile detection time constant used by the first detection circuit **3** is determined to be substantially in proportion to the diameter of the light spot. The detection time constant used by the second detection circuit **4** is also determined to be substantially in proportion to the diameter of the light spot.

The detection time constants T1 and T2 are determined so as to detect a decrease in the level of the reproduction signals RS1 and RS2. Therefore, the detection time constants T1 and T2 can be determined to be short so long as the slopes of the detection signals DS1 and DS2 shown in Figures **9B** and **9D** are obtained.

It should be noted that when the detection time constant is determined to be excessively short so that a rapidly decreasing reproduction signal level is detected, unnecessary noise is picked up. Accordingly, the detection time constant is determined to be appropriate in consideration of the dimensions of the light spot.

It is preferable to determine the detection time constant to be substantially in proportion to the diameter of the light spot. In this case, the slicing performance obtained when the light beam passes through the defect of the optical disk **1** (Figure **1**) is improved while the generation of jitter when the optical disk **1** has no defect is not deteriorated without picking up the unnecessary noise.

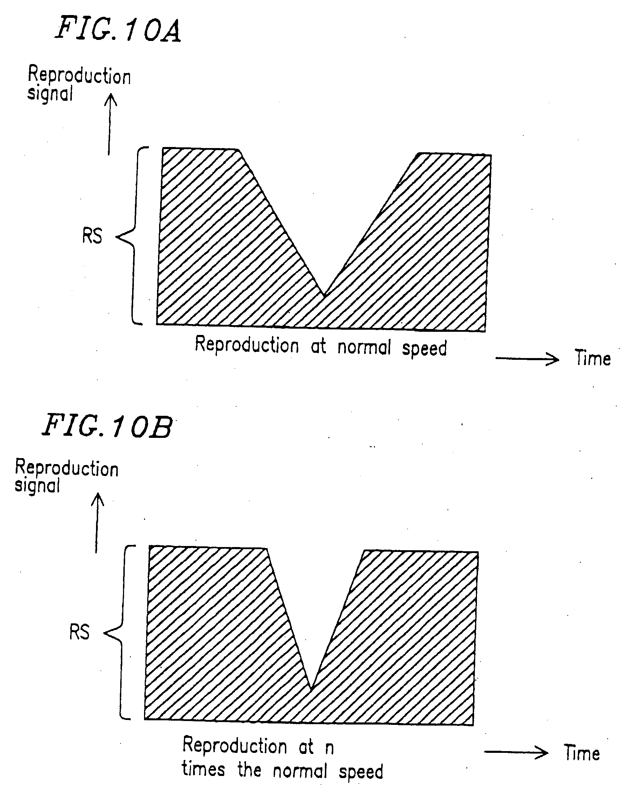

The detection time constant used by the first detection circuit **3** or the second detection circuit **4** can be determined so as to be substantially in inverse proportion to the reproduction linear velocity. Figures **10A** and **10B** show fluctuations of the reproduction signal RS when the light beam passes through the defect of the optical disk **1** (Figure **1**), with different linear velocities of the same defect. Figure **10A** shows the fluctuation when the optical disk **1** is reproduced at the normal speed, and Figure **10B** shows the fluctuation when the optical disk **1** is reproduced at the speed of n times the normal speed.

As can be appreciated from the comparison between Figure **10A** and Figure **10B**, when the linear velocity is n times higher, the decreasing rate of the level of the reproduction signal RS is also n times higher, and accordingly the optimum detection time constant is 1/n. In this manner, the detection time constant is determined to be substantially in inverse proportion to the reproduction linear velocity.

The cutoff frequency of the low pass filter **6** can be determined to be substantially in inverse proportion to the diameter of the light spot on the optical disk **1** (Figures **9A** and **9C**). As shown in Figures **9A** and **9B**, when the diameter of the light spot is n times larger, the decreasing rate of the level of the reproduction signal RS is 1/n. When the diameter of the light spot is 1/n, the decreasing rate of the level of the reproduction signal RS is n times higher.

When the decreasing rate of the level of the reproduction signal RS is n times higher, the frequency of the hazardous DC fluctuation component (Figure **7C**) included in the smoothed signal SM2 becomes n times higher. In order to allow the fluctuation component having the frequency of n times higher to pass through the low pass filter **6**, the cutoff frequency of the low pass filter **6** needs to be set at n times higher.

Accordingly, when the diameter of the light spot is 1/n, the cutoff frequency of the low pass filter **6** is set at n times higher. In this manner, the cutoff frequency of the low pass filter **6** is determined to be substantially in inverse proportion to the diameter of the light spot.

In this case, the slicing performance obtained when the light beam passes through the defect of the optical disk **1** (Figure **1**) is improved while the generation of jitter when the optical disk **1** has no defect is not deteriorated.

The cutoff frequency of the low pass filter **6** can be determined to be substantially in proportion to the reproduction linear velocity. As shown in Figure **10B**, when the reproduction linear velocity is n times higher, the decreasing rate of the level of the reproduction signal RS obtained when the light beam passes through the defect of the optical disk **1** is also n times higher.

When the decreasing rate of the level of the reproduction signal RS is n times higher, the frequency of the hazardous DC fluctuation component (Figure **7C**) included in the smoothed signal SM2 becomes n times higher. In order to allow the fluctuation component having the frequency of n times higher to pass through the low pass filter **6**, the cutoff frequency of the low pass filter **6** needs to be set at n times higher.

Accordingly, when the reproduction linear velocity is n times higher, the cutoff frequency of the low pass filter **6** is set at n times higher. In this manner, the cutoff frequency of the low pass filter **6** is determined to be substantially in proportion to the reproduction linear velocity.

In this case, the slicing performance obtained when the light beam passes through the defect of the optical disk **1** (Figure **1**) is improved while the generation of jitter when the optical disk **1** has no defect is not deteriorated.

(Example 3)

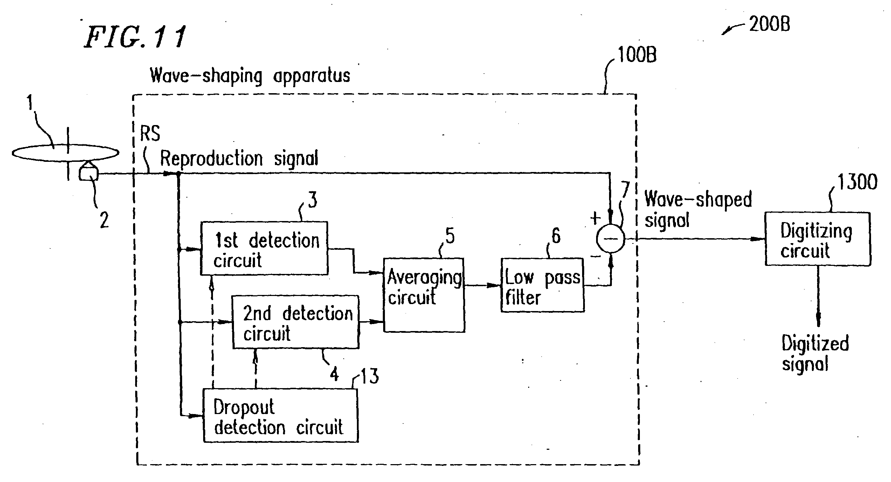

Figure 11 is a block diagram of a reproduction signal processing apparatus **200B** in a third example according to the present invention. Identical elements previously discussed with respect to Figure **1** bear identical reference numerals and the descriptions thereof will be omitted. The reproduction signal processing apparatus **200B** includes a wave-shaping apparatus **100B** and the digitizing circuit **1300**.

The wave-shaping apparatus **100B** includes a dropout detection circuit **13** for detecting a dropout indicating a decrease in the amplitude of the reproduction signal RS in addition to the elements shown in Figure **1**.

When the dropout detection circuit **13** detects a dropout, at least one of the first detection time constant used by the first detection circuit **3** and the second detection time constant used by the second detection circuit **4** is determined to be shorter than the time constant when no dropout is detected. Accordingly, when a dropout is detected, a negative feedback digitizing slicing level can follow a disturbance more accurately in a period corresponding to the disturbance caused by a defect. When no dropout is detected (normal reproduction), the noise or the like generated in the first or second detection circuit **3** or **4** is suppressed. Accordingly, the slicing performance obtained when the light beam passes through the defect of the optical disk **1** (Figure **1**) is improved while the generation of jitter when the optical disk **1** has no defect is not deteriorated.

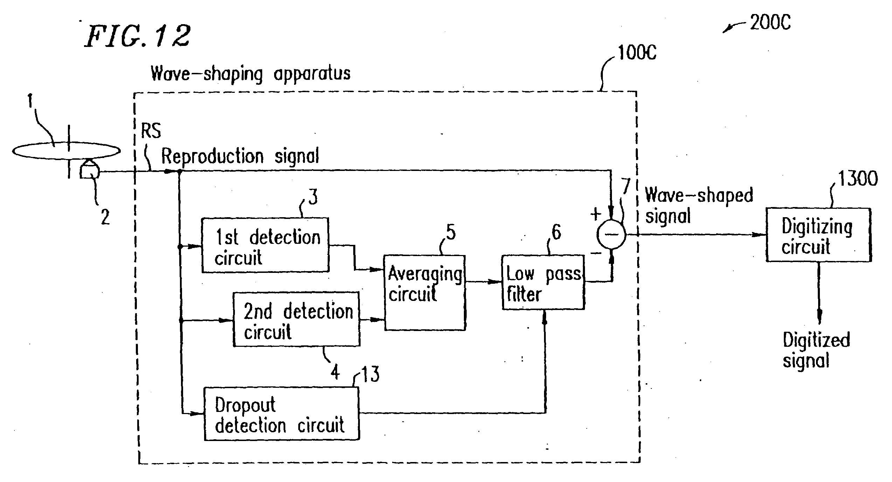

Figure **12** is a block diagram of another reproduction signal processing apparatus **200C** in the third example according to the present invention. Identical elements previously discussed with respect to Figure **11** bear identical reference numerals and the descriptions thereof will be omitted. The reproduction signal processing apparatus **200C** includes a wave-shaping apparatus **100C** and the digitizing circuit **1300**.

When the dropout detection circuit **13** detects a dropout, the cutoff frequency of the low pass filter **6** is set at higher than the time constant when no dropout is detected. Accordingly, when a dropout is detected, a hazardous DC fluctuation component generated in a period corresponding to a disturbance caused by a defect is allowed to pass through the low pass filter **6**. When no dropout is detected (normal reproduction), the noise or the like generated in the first or second detection circuit **3** or **4** is suppressed. Accordingly, the slicing performance obtained when the light beam passes through the defect of the optical disk **1** (Figure **1**) is improved while the generation of jitter when the optical disk **1** has no defect is not deteriorated.

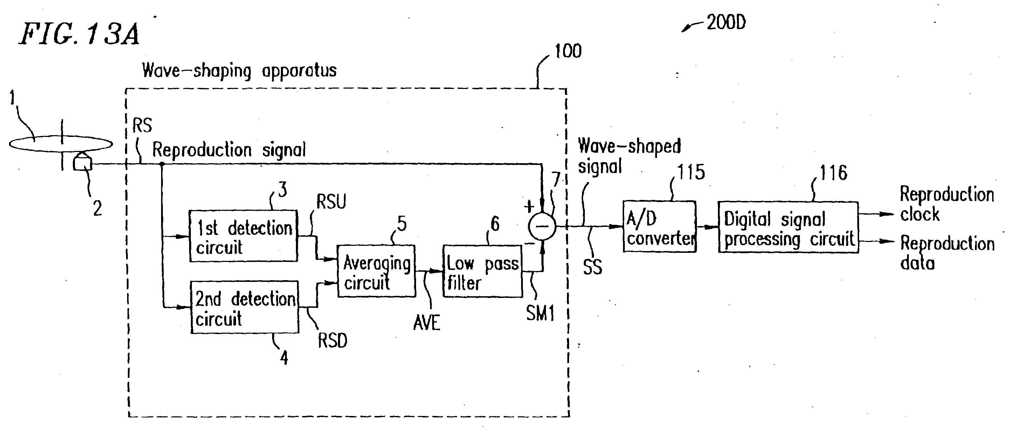

In the first through third examples, the reproduction signal processing apparatuses respectively including the wave-shaping apparatuses **100**, **100A**, **100B** and **100C** which are used for pre-processing a signal before the signal is input to the analog digitizing circuit **1300**. As shown in Figure **13A**, processing equivalent to the above-described processing can be performed on a digital signal which is obtained by conversion performed by an A/D converter **115** by digital signal processing.

Figure **13A** is a block diagram illustrating a structure of still another reproduction signal processing apparatus **200D** in the third example according to the present invention. Identical elements previously discussed with respect to Figure **1** bear identical reference numerals and the descriptions thereof will be omitted.

The reproduction signal processing apparatus **200D** includes the wave-shaping apparatus **100**, an A/D converter **115** for performing A/D conversion of a wave-shaped signal SS output by the wave-shaping apparatus **100**, and a digital signal processing circuit **116** for performing digital signal processing of the signal output by the A/D converter **115** and outputting reproduction data and a reproduction clock.

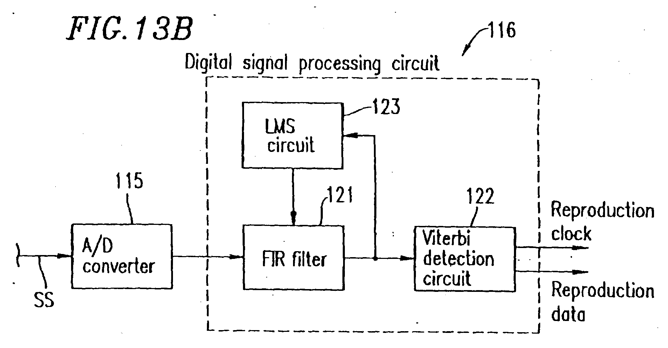

Figure **13B** is a block diagram illustrating one example of a structure of a digital signal processing circuit **116**. The digital signal processing circuit **116** includes an FIR (finite impulse response) filter **121** for performing waveform equalization, a Viterbi detection circuit **122**, and an LMS (least mean square) circuit **123**. A tap coefficient pitch of the FIR filter **121** is set to be an integer multiple of the reproduction clock. A tap coefficient of the FIR filter **121** is set so as to provide desired transmission characteristics of the subsequent reproduction system. For example, PR(3443) equalization or PR(1221) equalization is performed. The tap coefficient is often set by an automatic equalization technique using LMS. After waveform equalization is performed by the FIR filter, maximum likelihood is performed by the Viterbi detection circuit **122** so as to output the most likely data.

When reproducing data stored in a recordable information recording medium such as for example, a DVD-RAM, DVD-R, DVD-R/W, CD-R or CD-R/W, such a digital signal processing circuit digitally corrects asymmetric signal distortion having an asymmetric analog level (also referred to as a "nonlinear signal distortion") which can occur in a reproduction signal obtained from teardrop-shaped recording marks in the recording medium which is caused by heat accumulation at the time of recording. Therefore, the distorted signal can be corrected into a signal which was originally intended to be recorded. Thus, such a digital signal processing circuit has an effect of reducing an error rate and jitter at the time of reproduction.

As described in the first through third examples, the wave-shaping apparatus outputs a wave-shaped signal SS which is an accurately digitized reproduction signal even when the level of the reproduction signal significantly fluctuates due to a defect on an optical disk. Such a function of the wave-shaping apparatus stabilizes the performance of the digital signal processing circuit **116**.

(Example 4)

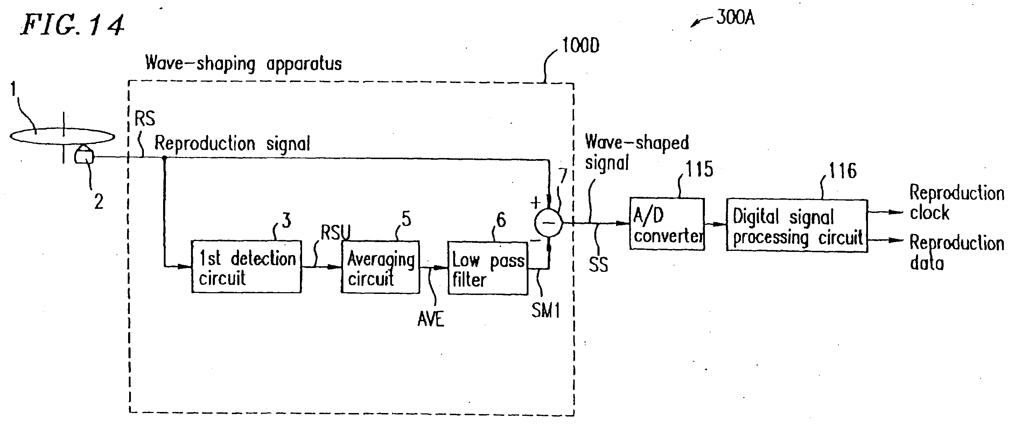

Figure **14** is a block diagram of a reproduction signal processing apparatus **300A** in a fourth example according to the present invention. Identical elements previously discussed with respect to Figure **13A** bear identical reference numerals and the descriptions thereof will be omitted.

The reproduction signal processing apparatus **300A** includes a wave-shaping apparatus **100D**, an A/D converter **115**, and a digital signal processing circuit **116**. The reproduction signal processing apparatus **300A** is different from the reproduction signal processing apparatus **200D** (Figure **13A**) in the third example in that the wave-shaping apparatus **100D** in the reproduction signal processing apparatus **300A** does not include the second detection circuit **4** but includes the first detection circuit 3 for detecting an upper envelope.

The wave-shaping apparatus **100D** can execute the wave-shaping processing shown in Figures **2A** through **2D** using the ground level instead of using the lower envelope shown in Figures **2A** and **2B**. In other words, a weight represented by a weighting coefficient M:N to each of the upper envelope RSU detected by the first detection circuit 3 and the ground level, and an average value AVE of the upper envelope and the ground level is found. In this manner, an effect same as that of the reproduction signal processing apparatus **200** described in the first example with reference to Figure **1** can be provided even without using the lower envelope RSD detected by the second detection circuit

4.

When the signal level of the upper envelope RSU is substantially the ground level, the reproduction signal processing apparatus 300A can include only the second detection circuit 4 for detecting the lower envelope RSD instead of the first detection circuit 3 for detecting the upper envelope RSU. In this case, the reproduction signal processing apparatus 300A can execute the wave-shaping processing shown in Figures 2A through 2D using the ground level instead of using the upper envelope shown in Figures 2A and 2B. In other words, a weight represented by a weighting coefficient M:N to each of the lower envelope RSD detected by the second detection circuit 4 and the ground level, and an average value AVE of the lower envelope and the ground level is found. In this manner, an effect same as that of the reproduction signal processing apparatus 200 described in the first example with reference to Figure 1 can be provided even without using the upper envelope RSU detected by the first detection circuit 3.

With reproduction signal processing apparatuses 300B and 300C described below also, an effect same as that of the reproduction signal processing apparatus 200 described in the first example with reference to Figure 1 can be provided by including either the first detection circuit 3 or the second detection circuit 4.

In Figure 14, the A/D converter 115 performs A/D conversion of a wave-shaped signal SS output by the wave-shaping apparatus 100D. The digital signal processing circuit 116 performs digital signal processing on a signal obtained by A/D conversion performed by the A/D converter 115, and outputs reproduction data and a reproduction clock.

A digital signal processing circuit for performing PRML processing has a higher data reproduction capability (i.e., a lower error rate) than that of a digitizing circuit for performing bit-by-bit processing. The digital signal processing circuit for performing PRML processing especially has a lower error rate for data stored in a recording medium, such as a DVD-RAM, wherein nonlinear recording distortion is caused by thermal recording. In order to make a maximum use of the dynamic range of the A/D converter 115 when performing A/D conversion, a maximum use of the number of bits of the A/D converter 115 located on a stage preceding the digital signal processing circuit 116 is needed.

In order to realize the maximum use of the number of bits of the A/D converter 115, it is ideal to input a reproduction signal to the A/D converter 115 so that an amplitude of the reproduction signal is the maximum value of the dynamic range of the A/D converter 115. However, when the reproduction signal has a defect such as, for example, a dropout, the amplitude of the reproduction signal exceeds the dynamic range of the A/D converter 115, and accordingly, the digital signal processing circuit 116 boated on a stage after the A/D converter 115 may undesirably malfunction. In order to prevent the malfunction of the digital signal processing circuit 116, the wave-shaping apparatus 100 (Figure 13A) or 100D (Figure 14) is provided before the A/D converter 115. The wave-shaping apparatuses 100D and 100 each wave-shape the reproduction signal RS so that the amplitude of the reproduction signal RS is constantly within the dynamic range and outputs the wave-shaped signal SS to the A/D converter 115.

In general, the lower envelope RSD changes significantly less than the upper envelope RSU when passing through the dropout portion. Accordingly, a wave-shaping apparatus for detecting only the upper envelope RSU is substantially usable. Hereinafter, a reproduction signal processing apparatus including a wave-shaping apparatus for detecting only the upper envelope RSU will be described.

Figure 15 is a block diagram of another reproduction signal processing apparatus 300B in the fourth example according to the present invention. Identical elements previously discussed with respect to Figure 6 in the second example and Figure 14 in the fourth example bear identical reference numerals and the descriptions thereof will be omitted.

The reproduction signal processing apparatus 300B includes a wave-shaping apparatus 100E, an A/D converter 115, and a digital signal processing circuit 116. As in the reproduction signal processing apparatus 200A described in the second example with reference to Figure 6, the wave-shaping apparatus 100E includes an asymmetry detection circuit 8. As in the reproduction signal processing apparatus 300A described with reference to Figure 14, the wave-shaping apparatus 100E does not include the second detection circuit 4 and includes only the first detection circuit 3 as the detection circuit.

Also as in the reproduction signal processing apparatus 300A shown in Figure 14, the wave-shaping apparatus 100E can execute the wave-shaping processing shown in Figures 2A through 2D using the ground level instead of using the lower envelope shown in Figures 2A and 2B. In other words, a weight represented by a weighting coefficient M:N to each of the upper envelope RSU detected by the first detection circuit 3 and the ground level, and an average value AVE of the upper envelope RSU and the ground level is found. In this manner, an effect same as that of the reproduction signal processing apparatus 200A described in the second example with reference to Figure 6 can be provided even without using the lower envelope RSD detected by the second detection circuit 4.

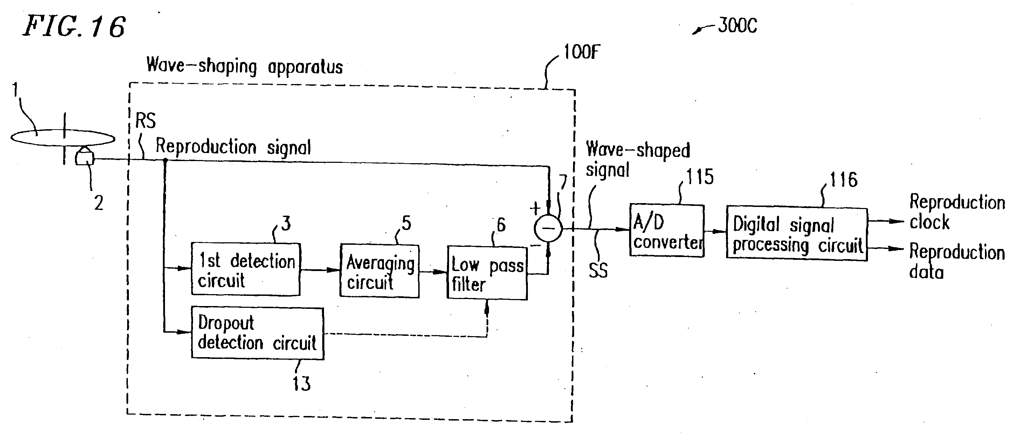

Figure 16 is a block diagram of still another reproduction signal processing apparatus 300C in the fourth example according to the present invention. Identical elements previously discussed with respect to Figures 11 and 12 in the third example and Figure 14 in the fourth example bear identical reference numerals and the descriptions thereof will be omitted.

The reproduction signal processing apparatus **300C** includes a wave-shaping apparatus **100F**, an A/D converter **115**, and a digital signal processing circuit **116**. As in the reproduction signal processing apparatuses **200B** and **200C** described in the third example with reference to Figures **11** and **12** respectively, the wave-shaping apparatus **100F** includes a dropout detection circuit **13**. As in the reproduction signal processing apparatus **300A** described with reference to Figure **14**, the wave-shaping apparatus **100F** does not include the second detection circuit **4** and includes only the first detection circuit **3** as the detection circuit.

Also as in the reproduction signal processing apparatus **300A** shown in Figure **14**, the wave-shaping apparatus **100F** can execute the wave-shaping processing shown in Figures **2A** through **2D** using the ground level instead of using the lower envelope shown in Figures **2A** and **2B**. In other words, a weight represented by a weighting coefficient M:N to each of the upper envelope RSU detected by the first detection circuit **3** and the ground level, and an average value AVE of the upper envelope RSU and the ground level is found. In this manner, an effect seine as that of the reproduction signal processing apparatuses **200B** and **200C** described in the third example with reference to Figures **11** and **12** respectively can be provided even without using the lower envelope RSD detected by the second detection circuit **4**.

The reproduction signal processing apparatuses **300A**, **300B** and **300C** described in detail in the fourth example do not need to include the second detection circuit **4** for detecting the lower envelope RSD unlike the reproduction signal processing apparatuses **200A**, **200B**, **200C** and **200D** described in the first, second and third examples. Accordingly, the reproduction signal processing apparatuses **300A**, **300B** and **300C** can simplify the structure of the respective wave-shaping apparatuses. As a result, the cost of each wave-shaping apparatus is reduced, and the cost of the reproduction signal processing apparatus including such a wave-shaping apparatus is also reduced.

In Figures **14** through **16**, the A/D converter **115** and the digital signal processing circuit **116** are connected to the wave-shaping apparatus, but the digitizing circuit **1300** shown in Figure **1** can be connected to the wave-shaping apparatus.

As described above, the present invention provides a wave-shaping apparatus which can accurately digitize a reproduction signal even when the level of the reproduction signal obtained from an optical disk significantly fluctuates by a defect on the optical disk, and a reproduction signal processing apparatus including such a wave-shaping apparatus.

The present invention provides a wave-shaping apparatus which can accurately digitize a reproduction signal even when the optical disk has no defeat, and a reproduction signal processing apparatus including such a wave-shaping apparatus.

In addition, the present invention solves the problem of the conventional art that a maximum use of the dynamic range of the A/D converter cannot be made from the viewpoint of SNR, due to the drop of the level of the reproduction signal down to a black level as seen in, for example, a dual layer DVD; and provides a wave-shaping apparatus which can utilize the dynamic range of the A/D converter to a maximum, and a reproduction signal processing apparatus including such a wave-shaping apparatus.

Moreover, the present invention provides, a wave-shaping apparatus which can improve the stability of the digital signal processing circuit, and a reproduction signal processing apparatus including such a wave-shaping apparatus.

According to the present invention, the output from the wave-shaping apparatus is sent to a digital signal processing circuit through an A/D converter. Due to such a structure, the distortion of an analog signal reproduced from a recordable disk can be digitally corrected, thus remarkably improving the signal quality.

Furthermore, in the structure where the wave-shaping apparatus includes a detection circuit for detecting the upper envelope (an upper line of the envelope of a reproduction signal which is closer to a mirror level) and does not include a detection circuit for detecting the lower envelope (a lower line of the envelope of a reproduction signal which is closer to a black level), the number of the detection circuits can be halved, thus simplifying the structure and reducing the cost of the reproduction signal processing apparatus.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A reproduction signal processing apparatus, comprising:

    a wave-shaping apparatus including:

       a detection circuit for detecting a reproduction signal stored in an optical disk and reproduced by an optical pickup circuit, using a prescribed detection time constant to detect at least one of an upper envelope and a lower envelope of the reproduction signal;
       an averaging circuit for putting a weight represented by a weighting coefficient to at least one of the upper envelope and the lower envelope detected by the detection circuit to calculate an average value obtained using at least one of the upper envelope and the lower envelope; and

a subtraction circuit for subtracting a signal corresponding to the average value calculated by the averaging circuit from the reproduction signal to output a wave-shaped signal; and

an A/D converter for performing A/D conversion of the wave-shaped signal output by the subtraction circuit.

2. A reproduction signal processing apparatus according to claim 1, further comprising a digital signal processing circuit for performing digital signal processing of an output from the A/D converter to output reproduction data and a reproduction clock.

3. A reproduction signal processing apparatus according to claim 1, wherein the detection circuit detects the upper envelope, and the averaging circuit puts a weight represented by a weighting coefficient to the upper envelope to calculate the average value.

4. A reproduction signal processing apparatus according to claim 1, wherein the detection circuit includes:

a first detection circuit for detecting the reproduction signal using a first detection time constant to detect the upper envelope of the reproduction signal, and
a second detection circuit for detecting the reproduction signal using a second detection time constant to detect the lower envelope of the reproduction signal,
wherein the averaging circuit puts a weight represented by a weighting coefficient to each of the upper envelope and the lower envelope to calculate the average value.

5. A reproduction signal processing apparatus according to claim 1, further comprising a low pass filter for smoothing the average value to output a smoothed signal, wherein the subtraction circuit subtracts the smoothed signal output by the low pass filter from the reproduction signal.

6. A reproduction signal processing apparatus according to claim 1, wherein the weighting coefficient is determined based on an asymmetry quantity of the reproduction signal.

7. A reproduction signal processing apparatus according to claim 1, wherein the prescribed detection time constant is determined to be substantially in proportion to a diameter of a light spot on the optical disk.

8. A reproduction signal processing apparatus according to claim 1, wherein the prescribed detection time constant is determined to be substantially in inverse proportion to a reproduction linear velocity of the optical disk.

9. A reproduction signal processing apparatus according to claim 5, wherein a cutoff frequency of the low pass filter is determined to be substantially in inverse proportion to a diameter of a light spot on the optical disk.

10. A reproduction signal processing apparatus according to claim 5, wherein a cutoff frequency of the low pass filter is determined to be substantially in proportion to a reproduction linear velocity of the optical disk.

11. A reproduction signal processing apparatus according to claim 1, wherein the wave-shaping apparatus further includes a dropout detection circuit for detecting a dropout indicating a decrease in an amplitude of the reproduction signal, wherein when the dropout is detected by the dropout detection circuit, the prescribed detection time constant is set to be shorter than a time constant set when no dropout is detected.

12. A reproduction signal processing apparatus according to claim 5, wherein the wave-shaping apparatus includes a dropout detection circuit for detecting a dropout indicating a decrease in an amplitude of the reproduction signal, wherein when the dropout is detected by the dropout detection circuit, a cutoff frequency of the low pass filter is set to be higher than a cutoff frequency set when no dropout is detected.

*FIG. 1*

Wave-shaping apparatus

## FIG.2A

Reproduction signal

RSU

D1

Upper envelope

Negative feedback digitizing slicing level

RS

SL1

RSD

Lower envelope

Time

## FIG.2B

Calculated signal

RSU

Upper envelope

m

n

AVE

RSD

Lower envelope

Time

## FIG.2C

Smoothed signal

SM1

Time

## FIG.2D

Wave-shaped signal

Negative feedback digitizing slicing level

SS

SL2

Time

14

## FIG.3

Averaging circuit

5

RSU

$$\times \frac{m}{m+n}$$

RSD

$$\times \frac{n}{m+n}$$

+

AVE

## FIG.4A

## FIG.4B

FIG.5

# FIG. 6

Wave-shaping apparatus

200A

100A

RS
Reproduction signal

1st detection circuit — 3 — RSU

2nd detection circuit — 4 — RSD

Averaging circuit — 5 — AVE1

Low pass filter — 6

Asymmetry detection circuit — 8 — ASC

Wave-shaped signal

7 — SM2

SS1

Digitizing circuit — 1300

Digitized signal

EP 1 096 488 A2

## FIG. 7A

Reproduction signal

ML  RSU  D1

RS

s

t

ASQ
Asymmetry
quantity

SL3  RSD

Time

## FIG. 7B

Calculated
signal

RSU

s

t

AVE1

RSD

Time

## FIG. 7C

Smoothed
signal

SM2

Time

## FIG. 7D

Wave-shaped
signal

SS1

Negative feedback
digitizing slicing level

SL3

Time

FIG.8

Averaging circuit — 5

ASC

Asymmetry detection circuit — 8

Peak detection circuit — 9

2nd low pass filter — 10

Bottom level detection circuit — 11

12A

12B

12C

Reproduction signal — RS

## FIG.9A

## FIG.9B

## FIG.9C

## FIG.9D

## FIG.10A

Reproduction
signal

RS

Reproduction at normal speed

Time

## FIG.10B

Reproduction
signal

RS

Reproduction at n
times the normal speed

Time

FIG.11

Wave-shaping apparatus

RS
Reproduction signal

200B

100B

1300

Wave-shaped
signal

Digitizing
circuit

Digitized
signal

1st detection
circuit

2nd detection
circuit

Dropout
detection circuit

Averaging
circuit

Low pass
filter

EP 1 096 488 A2

## FIG.12

Wave-shaping apparatus

200C

100C

RS
Reproduction signal

1

2

3
1st detection circuit

2nd detection circuit

4

13
Dropout detection circuit

5
Averaging circuit

6
Low pass filter

7
+ −
Wave-shaped signal

1300
Digitizing circuit

Digitized signal

EP 1 096 488 A2

## FIG. 13A

**Wave-shaping apparatus** 100

- 1
- 2
- RS Reproduction signal
- 1st detection circuit 3 → RSU
- 2nd detection circuit 4 → RSD
- Averaging circuit 5 → AVE
- Low pass filter 6
- SM1, 7 (+/−)
- Wave-shaped signal → SS
- A/D converter 115
- Digital signal processing circuit 116
- Reproduction clock
- Reproduction data

EP 1 096 488 A2

## FIG.13B

Digital signal processing circuit — 116

SS → A/D converter (115) → FIR filter (121) → Viterbi detection circuit (122) → Reproduction clock / Reproduction data

LMS circuit (123)

EP 1 096 488 A2

# FIG.14

Wave-shaping apparatus

**Wave-shaping apparatus** — 100D

RS — Reproduction signal

1 ... 2

3 — 1st detection circuit → RSU — 5 Averaging circuit → AVE — 6 Low pass filter → SM1

7 (+/−) → Wave-shaped signal — SS

115 — A/D converter → 116 — Digital signal processing circuit → Reproduction clock / Reproduction data

300A

EP 1 096 488 A2

EP 1 096 488 A2

# FIG.15

300B

Wave-shaping apparatus

100E

RS
Reproduction signal

1

2

Wave-shaped
signal

115

116

Reproduction
clock

Reproduction
data

3

RSU

5

6

7

+

−

A/D
converter

Digital signal
processing circuit

1st detection
circuit

Averaging
circuit

Low pass
filter

SS1

SM2

Asymmetry
detection circuit

AVE

8

ASC

## FIG.16

Wave-shaping apparatus

300C

100F

1

RS

Reproduction signal

2

3
1st detection circuit

5
Averaging circuit

6
Low pass filter

Dropout detection circuit

13

7
+ −

Wave-shaped signal

SS

115
A/D converter

116
Digital signal processing circuit

Reproduction clock

Reproduction data

EP 1 096 488 A2

*FIG.17A*

1300

Digitizing circuit

Low pass filter

104

103

101A } 101
101B

102

Vcc

SL

110

DG

Comparator

DG1 Digitized signal

110A

110B

R

E

C

Reproduction signal

RS

1

2

## FIG.17B

## FIG.18

Reproduction signal

High pass filter — 105

Wave-shaped signal

Digitizing circuit — 1300

Digitized signal

RS

1

2

EP 1 096 488 A2

FIG.19